Europäisches Patentamt

European Patent Office

Office européen des brevets

(11) Publication number: 0 375 938
A1

## EUROPEAN PATENT APPLICATION

(21) Application number: 89121616.0

(22) Date of filing: 23.11.89

(51) Int. Cl.5: F16C 43/06, //F16C33/60, (F16C19/18,19:38)

(30) Priority: 01.12.88 IT 2280688

(43) Date of publication of application:
04.07.90 Bulletin 90/27

(84) Designated Contracting States:
AT BE CH DE ES FR GB GR IT LI LU NL SE

(71) Applicant: OMET S.r.l.
22, Via Caduti a Fossoli
I-22053 Lecco (CO)(IT)

(72) Inventor: Bartesaghi, Angelo
Via Roccolo, 6
I-22053 Lecco (Como)(IT)

(74) Representative: Marietti, Giuseppe
CENTRO DI CONSULENZA IN PROPRIETA'
INDUSTRIALE Viale Caldara, 43
I-20122 Milano(IT)

(54) Rolling-contact bearing.

(57) In a rolling-contact bearing have two or more races, the rolling elements (12), preferably balls, are inserted into the races between the inner and outer rings (resp. 11, 9) through holes (7) in one of said rings, in a direction substantially perpendicular to the bearing axis.

Where possible, e.g. in combined bearings, one or more groups of rolling elements (13) is positioned in the respective race before the definitive assembly of the bearing.

Fig.2

EP 0 375 938 A1

## ROLLING-CONTACT BEARING

The present invention concerns a rolling-contact bearing with two or more rolling element races.

In greater detail, the present invention concerns a rolling-contact bearing in which the rolling elements, preferably balls, are positioned in the races without cages, and are therefore free to move along the races, restricted only by the presence of the neighbouring balls. Essentially two types of rolling-contact bearings are known at present: those in which the balls or rollers which roll in the races are separated by a cage and those where the rolling elements are free to roll without a cage or similar spacing element.

In the second case the resulting bearing has a larger number of balls than there would be in the case of a similar bearing with a cage, and can support a greater radial loading. However, unlike the known rolling-contact bearing with a cage, this type of bearing has almost no axial load carrying ability, which limits its use to a few specific applications.

On the other hand the advantages given by the increased radial loading capacity, the simpler construction and the ease of assembly of the cageless bearings compared to the traditional ones are such as to create the necessity of obtaining a rolling-contact bearing of the cageless type which can support axial loadings too.

An object of the present invention is to overcome the above mentioned shortcomings and produce a rolling-contact bearing, without a cage or other similar distancing elements, with load bearing capacity in both axial and radial directions.

Such object is achieved by bearings according to the present invention, with at least two groups of rolling elements, which can be inserted in the respective races through a lateral opening in one of the rings and which, due to the presence of a plurality of races, are able to support greater loads, both in axial and radial directions, than traditional bearings.

In more detail, the present invention concerns a rolling-contact bearing of the type consisting of one or more external rings, one or more internal rings and a plurality of rolling elements positioned in races between said internal and external rings, forming two or more races of rolling elements, characterized in that it comprises at least one opening formed in correspondence of one race in at least one of said rings for the insertion of the rolling elements in a direction substantially perpendicular to the bearing axis, as well as and means to close said opening(s).

The present invention will now be described in greater detail with reference to the attached drawings which are given for illustrative and not limitative purposes:

- Fig.1 is a sectional view of a first embodiment of the present invention.
- Fig.2 is a sectional view of a combined bearing according to the present invention.
- Fig.3 is a sectional view of an alternative embodiment of the bearing of fig.2
- Figs 4 and 5 are sectional views of multiple ring combined bearings.

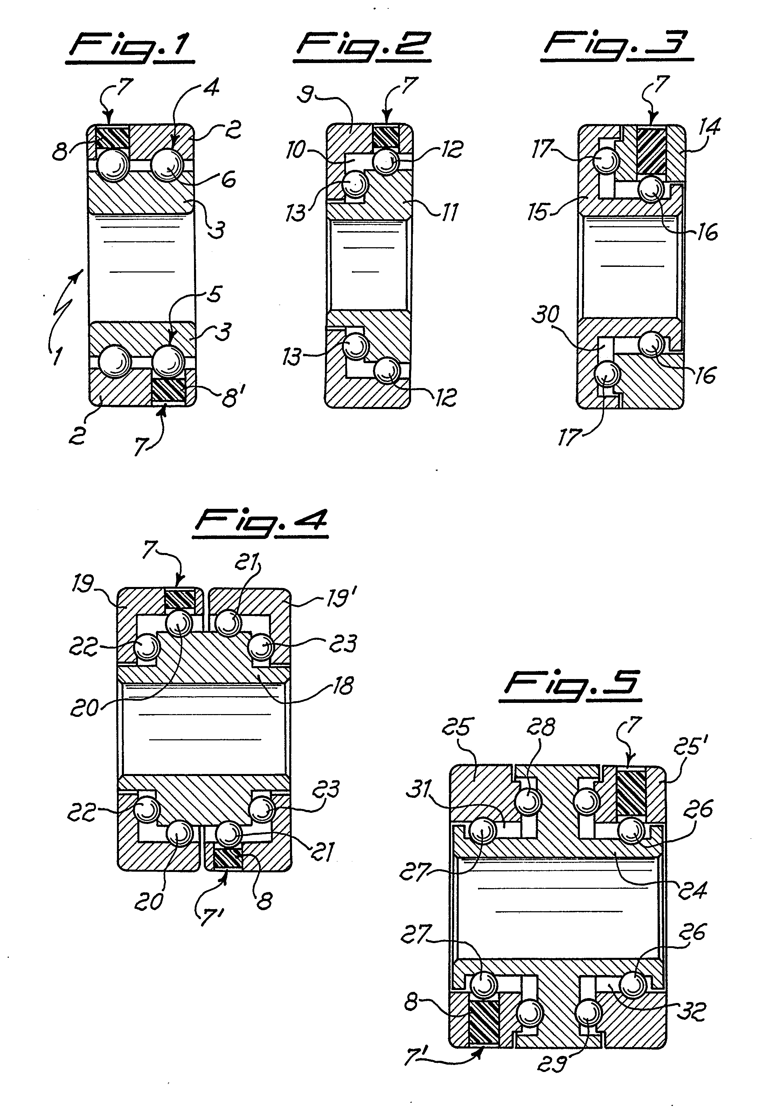

With reference to Fig.1, a bearing 1 is composed of an external ring 2 and an internal ring 3, co-axially placed and having grooves 4 and 5 on their inner and outer surfaces respectively, in order to form two races in which the rolling elements 6 run. Preferably, the rolling elements 6 are balls, as will be referred to in the following description.

There are only two ball-races in the preferred embodiment shown in fig.1, but it is possible to produce bearings with more than two races, depending on the foreseen radial loading.

As it can be seen, there is an opening 7, 7′ on the external ring 2 in correspondence to each race, said opening being perpendicular to the bearing axis and at least equal in size to the ball 6. This openings serve, when the two rings have been correctly coaxially positioned, to introduce the balls 6 into the tracks or races formed by the two grooves 4 and 5.

Thus it is possible to produce a rolling-contact bearing without a cage or other similar means of distancing or positioning the rolling elements, which has considerable axial load carrying capacity.

In this regard, it has been shown experimentally that if the openings 7 and 7′, through which the balls are introduced, are directed substantially perpendicular to the bearing axis, such bearing is able to support axial loadings too and this capacity increases with the increasing number of ball-races in the bearing.

The invention therefore permits the production of thrust bearings with a plurality of races, compared to the two races of the traditional thrust bearings.

The openings 7 and 7′ can be made in either the external or internal rings, but the former is preferred for practical reasons. To prevent loss of balls 6 from the openings 7 and 7′, the latter are closed by plugs 8 and 8′ respectively, generally made from a plastic such as nylon or some similar low friction coefficient material.

As well as the number of ball-races, the depth of the grooves 4 and 5 can be varied depending on the type of bearing required. As it can be seen, the bearing shown in fig.1 is of the CONRAD or deep groove type, while the other figures show bearings with shallower grooves.

Fig.2 shows a "combined" type bearing, with thrust bearing function.

The bearing in fig.2 is composed of an external ring 9 and an internal ring 11, both having a "L" section profile, which overlap and mirror each other to form a "Z-shaped" inter-ring space 10 which contains the balls 12 and 13.

As can be seen, only one opening 7 is formed on the outside of external ring 9 for the introduction of the balls 12 only, principally to support the radial loads.

The balls 13, which constitute the other group of ball-bearings in the bearing and principally support the axial loads, do not need any insertion opening since they can be located on one of the two rings e.g. the outer ring 9, before assembling the remaining ring.

The sequence for the assembly of this type of bearing is the following one: the balls 13 are located on the ring 9 (or 11), the internal ring 11 is positioned within the external one (or vice versa), the balls 12 are loaded through opening 7 into their race, and the opening is then sealed with plug 8.

The bearing shown in fig.3 is an alternative to that of fig.2, in that the external ring 14 has a substantially rectangular section, and the internal ring 15 has a substantially "C" shaper section which partially encloses the external ring 14 to form a "L-shaped" inter-ring space 30 where the groups of ball-bearings 16 and 17 are located.

In this case too, only a single opening 7 is required in the external ring, in a direction perpendicular to the bearing axis for the insertion of balls 16, since the remaining balls 17 can be located in their respective races in a manner analogous to that already described for fig.2.

Figs. 4 and 5 show embodiments of multiple ring combined bearings, with four groups of ball-bearings. These bearings are substantially the bearings of figs. 2 and 3, suitably "doubled".

For example, the bearing in fig.4 is formed by an internal ring 18 which has a "T" shaped profile in section, and two external rings 19 and 19′ which have a "L" shaped profile and combine to jointly form a "U" shape.

Similarly to what has been already described, only the radial balls, i.e. 20 and 21, need to be inserted into their respective tracks through the openings 7 and 7′; the remaining "axial" balls, 22 and 23, are located on their respective grooves during assembly of the bearing.

The same could be said with reference to fig.5, where the internal ring 24 has a substantially "T" shaped profile in section and partially overlaps two substantially rectangular section external rings, 25 and 25′ to form two "L-shaped" internal spaces 31 and 32, in which are located four groups of balls.

In this case too, only the balls supporting the principally radial loads, 26 and 27, need to be inserted through the openings 7 and 7′ to their respective races, after the balls supporting axial loads, 28 and 29, have been located on their respective external rings 25 and 25′.

From what has been shown above, it is obvious that the bearings according to the present invention are less expensive and easier to produce than the traditional bearings with caged ball-bearings, while the load bearing capability, both axial and radial, is at least equal to similar cage bearings.

## Claims

1. A rolling-contact bearing of the type consisting of one or more external rings and one or more internal rings and a plurality of rolling elements positioned in races between said internal and external rings, forming two or more groups of rolling elements, characterized in that it has at least one opening formed in correspondence to one race in at least one of said rings for the insertion of the rolling elements, in a direction substantially perpendicular to the bearing axis, as well as means to close said opening(s).

2. A bearing according to Claim 1, characterized in that it has one insertion opening for each group of rolling elements.

3. A bearing according to Claim 1 having at least one group of rolling elements to support radial loads, and at least one group of rolling elements to support axial loads, characterized in that said insertion opening(s) are placed in correspondence to the radial load bearing races only.

4. A bearing according to Claim 3, characterized in that said external and internal rings have an "L-shaped" profile in section and are arranged to form an internal, substantially "Z" shaped space in which are located two groups of rolling elements.

5. A bearing according to Claim 3, characterized in that it comprises an external ring with a substantially rectangular section profile and an internal ring that has a substantially "C" shaped profile in section, said internal ring partially overlapping said external ring to form a substantially "L" shaped internal space in which two groups of rolling elements are located.

6. A bearing according to Claim 3, characterized in that it comprises two side-by-side external rings which together form a "U" shaped profile in section, and an internal ring which has a "T" shaped profile in section, the external rings overlapping the vertical part of the "T" to form an internal space which is substantially "U" shaped in section and in which four groups of rolling elements are located.

7. A bearing according to Claim 3, characterized in that it comprises two external rings with a substantially rectangular profile in section and an internal ring with a substantially "T" shaped profile in section, said internal ring partially overlapping said external rings to form two substantially "L" shaped internal spaces in which four groups of rolling elements are located.

8. A bearing according to one of Claims 1 to 4, characterized in that said rolling elements consist of balls.

_Fig.1_

_Fig.2_

_Fig.3_

_Fig.4_

_Fig.5_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A- 876 535 (EISENWERK ROTHE ERDE) <br> * Entirely * <br> --- | 1,3,4,8 | F 16 C 43/06 // <br> F 16 C 33/60 <br> F 16 C 19/18 <br> F 16 C 19/38 |
| X | FR-A-1 562 489 (UNITED AIRCRAFT CORP.) <br> * Page 5, lines 7-23; figure 8 * <br> --- | 1,2,8 | |
| X | CH-A- 324 015 (FOENETER SA.) <br> * Entirely * | 1,2,8 | |
| A | | 3,5 | |
| | --- | | |
| X | FR-A- 817 265 (J.A. PARENT) <br> * Page 1, line 53 - page 2, line 3; <br> figure 1 * <br> --- | 1,2,8 | |
| A | US-A-3 748 002 (J.E. BARKER et al.) <br> * Columns 2,3; figures 1,4 * <br> --- | 1,2,3,6 | |
| X | FR-A-2 190 208 (CORAX-DEFONTAINE) <br> * Entirely * <br> --- | 1,2 | |
| A | GB-A- 25 278 (C.G. SÖDERLUND)(A.D. <br> 1913) <br> ----- | | TECHNICAL FIELDS SEARCHED (Int. Cl.5) <br><br> F 16 C |

The present search report has been drawn up for all claims

| Place of search | Date of completion of the search | Examiner |
|---|---|---|
| THE HAGUE | 06-03-1990 | BEGUIN C.P. |